# EUROPÄISCHE PATENTANMELDUNG

(11) **EP 4 844 239 A1**
(43) Veröffentlichungstag der Anmeldung: **25.11.2026**
(21) Anmeldenummer: 26176214.0
(22) Anmeldetag: 04.05.2026
(51) Int. Cl.: F16C 33/20, F16C 3/02, F16C 17/02, F16C 17/03, F16C 33/02, F16C 33/12, F16C 33/26, F16C 11/02

(54) **POLYMERBESCHICHTUNG SOWIE VERFAHREN ZUR HERSTELLUNG EINER SOLCHEN**

(30) Priorität: 22.05.2025 DE 102025120002
(71) Anmelder: COB Precision Parts Inc, Jiaxing, Zhejiang 314003 (CN)
(72) Erfinder: DECKER, Peter, 30177 Hannover (DE); GONG, Ying, Jiaxing City, 314500 (CN); ZHANG, Guoqiang, Jiaxing City, 314100 (CN)
(74) Vertreter: Horak, Michael

(57) **Zusammenfassung**

Die Erfindung betrifft eine Stahlwelle, eines Gleitlagersegments und/oder einer Lagerschale mit Polymerbeschichtung sowie Verfahren zur Herstellung einer solchen, wobei eine direkte Beschichtung mit einer Polymergleitschicht erfolgt, ohne dass zuvor metallische Gleitmaterialien aufgebracht oder Zwischenschritte erfolgen müssen.

## Beschreibung

### Kurzdarstellung der Erfindung

Die vorliegende Erfindung betrifft eine Polymerbeschichtung sowie ein Verfahren zur Herstellung einer solchen.

In gleitgelagerten Planetengetrieben, insbesondere in Getrieben für Windenergieanlagen, kommen Lagerungen zum Einsatz, bei denen eine metallische Gleitschicht auf oder um die Planetenwelle appliziert ist.

In der DE 10 2019 218116 A1 ist, beispielsweise, eine Schwimmbuchse beschrieben, die aus einem Lagermetall gefertigt ist und als Gleitlagerung des Planetenrades auf der Planetenwelle dient.

Die US 12140121 B2 offenbart weiterhin eine Gleitschicht, die durch Auftragschweißen auf eine Stahlwelle aufgebracht ist.

Die US 10253817 B2 legt eine Hülse aus Lagermaterial offen, die drehfest auf der Planetenwelle verankert ist.

Ferner beschreibt die EP 3087281 B1 eine nichtmetallische Gleitfläche in Form einer abgeschiedenen Hartstoffschicht.

Allen oben genannten Konstruktionen ist gemeinsam, dass diese für einen vorwiegend hydrodynamischen Betrieb vorgesehen sind, d.h. dass es zu Mischreibung nur im Start-Stopp und in wenigen Sonderlastfällen kommen sollte. Bei zunehmender Leistungsdichte der Getriebe ist allerdings von längerem Betrieb in der Mischreibung auszugehen, wofür die üblichen Gleitschichten nicht geeignet sind. Folglich sind bei längerem Betrieb in der Mischreibung Gleitschichten mit neuen Anforderungen gefragt, welche zum einen verschleißfest sein sollte, aber nicht zu hart, so dass es zum sogenannten Fressen der Reibpartner kommen kann, d. h. zu einer höheren Abtragung von Material. Zum anderen sollte der Gleitreibungskoeffizient möglichst gering sein, um eine übermäßige Erwärmung der Bauteile zu vermeiden.

Um diesen gestiegenen Anforderungen gerecht zu werden, beschreibt EP 2867019 B1 beispielhaft die Applizierung eines Einlauffilms auf einer metallischen Gleitschicht.

Die WO 2019 076677 A1 beschreibt eine Möglichkeit reibungsreduzierende Polymerzusätze in eine metallische Gleitlagermatrix einzubetten.

WO 2023 217527 A1 zeigt, dass reibungsreduzierende Feststoffe, wie Grafit, Molybdändisulfid, bzw. Polymere, beim Laserauftragsschweißen in eine metallische Lagermatrix eingebettet werden können.

Eine Möglichkeit eine Polymerschicht auf eine herkömmliche metallische Gleitlagerbeschichtung aufzubringen, wird unter anderem in CN 000116517952 A und in EP 4050227 A1 dargelegt.

Der Nachteil dieser Veröffentlichungen ist, dass zuerst immer eine metallische Gleitschicht aufgebracht werden muss. Das ist in aller Regel mit einem aufwendigen und energieintensiven Gieß- oder Schweißprozess verbunden. Zur Verankerung einer Polymergleitschicht auf Stahloberflächen sind beispielsweise Verfahren bekannt, bei denen sich die Gleitschicht mechanisch an der entsprechend aufbereiteten Oberfläche verankert.

Eine Variante einer bekannten Verankerung wird in CN 217207360 U beschrieben. Hierbei wird eine offenporige Zwischenschicht auf dem Stahlkörper aufgebracht und in dieser wird sodann die Polymergleitschicht verankert. In der CN 111503155 B wird beispielsweise eine Bearbeitung der Stahloberfläche beschrieben, die als Verankerung der Polymergleitschicht dienen kann. In bekannten Beschichtungsprozessen, wie beispielsweise in der CN111503155B beschrieben, wird die Polymergleitschicht in Form von beispielsweise Plattenmaterial unter Hitzeeinwirkung auf die strukturierte Oberfläche gepresst. Diesen Verfahren ist gemeinsam, dass sie für die Beschichtung von flachen oder leicht gekrümmten Stahlkörpern geeignet sind.

Die Aufgabe der vorliegenden Erfindung ist eine Polymergleitschicht zur Verfügung zu stellen, wobei die Gleitschicht einfacher herzustellen ist, als im Stand der Technik bekannt sowie einen niedrigen Reibkoeffizienten, gute Mischreibungseigenschaften und eine gute Verschleißfestigkeit aufweist. Ferner soll bei der Herstellung einer Polymerbeschichtung, beispielsweise auf einer Stahlwelle, einem Gleitlagersegment und/oder einer Lagerschale, auf etwaige Zwischenschritte, wie die Herstellung von Halbzeugen aus Gleitmaterial, verzichtet werden, um die Fertigung, beispielsweise einer Stahlwelle, kostengünstiger und schneller gestalten zu können, sowie, beispielsweise, eine Stahlwelle, ein Gleitlagersegment und/oder eine Lagerschale mit verbesserten Eigenschaften hervorzubringen.

Die vorliegende Erfindung betrifft daher eine Stahlwelle mit Polymerbeschichtung zur Befestigung an einem ersten Durchmesser, an einem zweiten Durchmesser oder an beiden Durchmessern, wobei mindestens ein Teil einer Fläche zwischen einem ersten Abschnitt der Welle und einem zweiten Abschnitt der Welle eine Polymerschicht aufweist, welche unmittelbar auf einen Stahlgrundkörper der Welle aufgebracht ist und wobei die Mantelfläche der Polymerschicht eine Gleitoberfläche ausbildet. Die Polymerschicht erstreckt sich vorzugsweise axial über eine Fläche zwischen dem ersten Abschnitt der Welle und dem zweiten Abschnitt der Welle.

Der Stahlgrundkörper der Welle umfasst vorzugsweise aus C45, 20CrMnMo, 20CrMnTi, 16MnCr5, 40Cr, 42CrMo4, 18CrNiMo7-6 und/oder 34CrNiMo6.

Ferner betrifft die Erfindung auch ein Gleitlagersegment und/oder eine Lagerschale mit einer Gleitschicht aus einer Polymerschicht, welche in fließfähiger Form direkt auf das Metallmaterial der jeweiligen Komponente aufgetragen wurde, wobei die Komponenten vorzugsweise auch aus C45, 20CrMnMo, 20CrMnTi, 16MnCr5, 40Cr, 42CrMo4, 18CrNiMo7-6 und/oder 34CrNiMo6 ausgebildet sind.

In einem Aspekt weist die Polymerschicht eine Schichtdicke von 0,1 mm bis 5 mm, vorzugsweise eine Schichtdicke von 0,5 mm bis 1,5 mm auf.

Die der Polymerschicht umfasst in einer Ausführungsform Polyamid, Polyurethan, Polyester, Polyphenylensulfid, Fluorpolymer, Polyetheretherketon (PEEK), Polyimidharz, Polyoxymethylen (POM), Alkydharz, Polyacrylat, Epoxidharz, Phenolharz und/oder Silikonharz. Die Polymerschicht kann ferner zusätzlich mindestens ein Additiv umfassen, wobei es sich bei dem Additiv vorzugsweise um Graphit, Kohlenstoff, Kohlenstoffnanoröhren, Polytetrafluorethylen, Polyethylen, Molybdändisulfid, Wolframdisulfid, Zinksulfid, Zinn, Calciumfluorid, Bornitrid, Silber und/oder Bismut handelt. In einer besonderes bevorzugten Ausführungsform handelt es sich bei der Polymerschicht um einen Gleitwerkstoff.

In einem weiteren Aspekt kann die Polymergleitschicht faserverstärkt sein. Bei der Faserverstärkung umfasst hierbei vorzugsweise ein oder mehrere Verstärkungsfasern wie beispielsweise Glasfasern, Basaltfasern, Borfasern, Keramikfasern, Kieselsäurefasern, Kohlenstofffasern, Quarzfasern, Metallische Fasern, Stahl-Fasern, Aramidfasern, Kevlarfasern, Poly(p-phenylen-2,6-benzobisoxazol)-Fasern, Polyester-Fasern, Polyethylen-Fasern, Polymethylmethacrylat-Fasern, Polyamid-Fasern, wie Nylon-Fasern, Flachs-Fasern, Hanf-Fasern, Holzfasern, Sisalfasern und/oder andere Mineralien.

Darüber hinaus kann die Polymerschicht in einer Ausführungsform auch reibungsmindernde Zusatzstoffe und/oder weitere Komponenten umfassen. Bei den Zusatzstoffen und/oder weiteren Komponenten kann es sich beispielsweise um Graphit, Polyethylen, Molybdänsulfid, Polyetrafluorethylen, Silikate, Titan(IV)-oxid, Siliciumcarbid, Kalk, Talk und/oder Glas handeln.

Die vorliegende Erfindung betrifft auch ein Verfahren zur Herstellung einer Stahlwelle, einem Gleitlagersegment und/oder einer Lagerschale mit einer Gleitschicht aus einer Polymerbeschichtung umfassend die folgenden Schritte:
1) Herstellen eines Stahlgrundkörpers einer Welle, eines Gleitlagersegments und/oder einer Lagerschale;
2) Aufbringen einer Polymergleitschicht unmittelbar auf mindestens eine Fläche des Stahlgrundkörpers, des Gleitlagersegments und/oder der Lagerschale; und
3) Abkühlen der Polymergleitschicht auf dem Stahlgrundkörper.

Die Aufbringung der Polymergleitschicht auf der Welle erfolgt in einem Aspekt der Erfindung auf die Fläche des Stahlgrundkörpers zwischen einem ersten Abschnitt der Welle und einem zweiten Abschnitt der Welle.

Die Polymergleitschicht wird vorzugsweise in einem fließfähigen Zustand aufgebracht. In einem bevorzugten Aspekt erfolgt die Auftragung der Polymerschicht in einem direkten Spritzgussverfahren, wobei die Polymerschicht aus dem Extruder kommend direkt, ohne Zwischenschritte, auf die Welle bzw. einen Teil der Welle, das Gleitlagersegment und/oder die Lagerschale aufgebracht wird und eine Gleitoberfläche (5) bildet.

Bei der Polymerschicht handelt es sich vorzugsweise um Polyamid, Polyurethan, Polyester, Polyphenylensulfid, Fluorpolymer, Polyetheretherketon, Polyimidharz, Polyoxymethylen, Alkydharz, Polyacrylat, Epoxidharz, Phenolharz und/oder Silikonharz. Zusätzlich kann in einem weiteren Aspekt mindestens ein Additiv oder eine weitere Komponente ausgewählt aus der folgenden Auflistung umfasst sein: Graphit, Kohlenstoff, Kohlenstoffnanoröhren, Polytetrafluorethylen, Polyethylen, Molybdändisulfid, Wolframdisulfid, Zinksulfid, Zinn, Calciumfluorid, Bornitrid, Blei, Silber, Bismut, Glasfasern, Basaltfasern, Borfasern, Keramikfasern, Kieselsäurefasern, Kohlenstofffasern, Quarzfasern, Metallische Fasern, Stahl-Fasern, Aramidfasern, Poly(p-phenylen-2,6-benzobisoxazol)-Fasern, Polyester-Fasern, Polyethylen-Fasern, Polymethylmethacrylat-Fasern, Polyamid-Fasern, Flachs-Fasern, Hanf-Fasern, Holzfasern, Sisalfasern, Mineralien, Silikate, Titan(IV)-oxid, Siliciumcarbid, Kalk, Talk, und/oder Glas.

In einer bevorzugten Ausführungsform wird die Polymerschicht mit einer Schichtdicke von 0,1 mm bis 5 mm, vorzugsweise mit einer Schichtdicke von 0,5 mm bis 1,5 mm aufgetragen.

In einem weiteren Aspekt der Erfindung kann vorgesehen sein, dass die die Oberfläche des Stahlgrundkörpers vor der Auftragung der Polymerschicht modifiziert wird. Insbesondere kann vorgesehen sein, dass lediglich ein Teil der Fläche des Stahlgrundkörpers modifiziert wird. Im Falle der Welle kann es sich bei dem einen Teil der Fläche, um die Fläche zwischen dem ersten Abschnitt der Welle und dem zweiten Abschnitt der Welle handeln. Bei der Modifizierung kann es sich beispielsweise um das Anrauen der Oberfläche oder das Aufbringen einer Oberflächenstruktur handeln.

Ferner betrifft die vorliegende Erfindung auch ein Getriebe einer Windenergieanlage umfassend mindestens eine zuvor beschriebene Stahlwelle, mindestens ein zuvor beschriebenes Gleitlagersegment und/oder mindestens eine zuvor beschriebene Lagerschale; oder mindestens eine Stahlwelle, mindestens ein Gleitlagersegment und/oder mindestens eine Lagerschale hergestellt nach einem zuvor beschriebenen Verfahren.

Die vorliegende Erfindung wird durch die Ausführungsformen in den Ansprüchen gekennzeichnet und durch die Ausführungen in der folgenden Beschreibung, den Beispielen und den Zeichnungen näher beschrieben.

### Beschreibung der Zeichnungen

- Fig. 1: Schematische Darstellung einer bevorzugten Ausführungsform einer erfindungsgemäßen Welle mit einer Gleitschicht aus Polymerbeschichtung.
- Fig. 2: Schematische Darstellung eines Querschnitts durch eine bevorzugte Ausführungsform einer erfindungsgemäßen Welle mit einer Gleitschicht aus Polymerbeschichtung.
- Fig. 3: Schematische Darstellung einer bevorzugten Ausführungsform einer mit mehreren polymerbeschichteten Gleitlagersegmenten.
- Fig. 4: Schematische Darstellung einer bevorzugten Ausführungsform eines Gleitlagersegments mit einer Polymerbeschichtung als Gleitbelag hergestellt in einem Spritzgussverfahren.

### Detaillierte Beschreibung der Erfindung

Die vorliegende Erfindung betrifft eine Polymerbeschichtung, vorzugsweise auf einer Stahlwelle, einem Gleitlagersegment (10) und/oder einer Lagerschale; sowie Verfahren zur Herstellung einer solchen, wobei eine direkte Beschichtung der Stahlwelle, einem Gleitlagersegment (10) und/oder einer Lagerschale mit einer Polymergleitschicht erfolgt, ohne dass zuvor anderweitige Gleitmaterialien aufgebracht werden müssen.

Im Folgenden sollten die Artikel "ein" und alle Ableitungen hiervon, wie sie hier verwendet werden, generell als "ein/e/es oder mehrere" verstanden werden, sofern nicht anderweitig angegeben oder aus dem Kontext als Singularform ersichtlich ist. Darüber hinaus werden die in der Beschreibung und den Ansprüchen verwendeten Begriffe "erste", "zweite" usw. verwendet, um die einzelnen Objekte aus Gründen der Klarheit zu unterscheiden und dienen nicht der Einschränkung in Größe, Reihenfolge oder Ähnlichem.

Sofern die Begriffe "enthält", "hat", "besitzt" und dergleichen in der Beschreibung oder den Ansprüchen verwendet werden, sollen diese Begriffe derart verstanden werden, wie der Begriff "aufweisend" oder "umfassend", d.h. nicht abschließend, außer es ist explizit angegeben.

Die Begriffe "Stahlwelle" und "Welle" werden in der hiesigen Erfindung austauschbar verwendet und beschreiben ein längliches zylinderförmiges Maschinenelement. In einer bevorzugten Ausführung handelt es sich um mindestens eine Welle aus Stahl vorzugsweise für die Verwendung in einem Getriebe einer Windenergieanlage.

Die Begriffe "Gleitlagersegment" (10) oder auch "Gleitlager", "Lager", "Gleitlagerung", "Gleitlager-" und "Lager-" werden im Folgenden austauschbar verwendet und beschreiben mindestens ein Bauteil, das es ermöglicht, gegeneinander bewegliche Bauteile zu führen, vorzugsweise innerhalb eines Planetenrades, wobei hierdurch auch Antriebe realisiert werden können, die zwei mit unterschiedlichen Drehzahlen zu beaufschlagende Antriebs- oder Abtriebszweige aufweisen.

Der Begriff "Lagerschale" bezeichnet eine Lagerhalbschale, bzw. Gleitlagerschale und wird in der Regel in geteilten Lagern verwendet, wobei herbei die Buchse in zwei Hälften geteilt ist, die als Lagerschalen bezeichnet werden.

Bei dem Stahl der Welle (1), des Gleitlagersegment (10) und/oder der Lagerschale, kann es sich beispielsweise, jedoch nicht begrenzt auf die Folgende Auflistung, um einen C45 (DIN EN 10083-2, AISI 1045), 20CrMnMo, 20CrMnTi, 40Cr, 16MnCr5, 42CrMo4, 18CrNiMo7-6 und/oder 34CrNiMo6 handeln. Ferner kann Stahlgrundkörper (4) der Welle (1) auch eine Legierung aufweisen, welche beispielsweise, Kupfer, Aluminium, Zinn, Kupfer-Zinn, Kupfer-Aluminium, Aluminium-Zinn, Aluminium-Silizium, Aluminium-Zink umfassen kann, jedoch nicht limitiert auf die vorherige Auflistung. Darüber hinaus kann der Legierung und/oder dem verwendeten Metall für den Stahlgrundkörper (4) auch ein oder mehrere der folgenden Elemente zugesetzt sein, Zinn, Blei, Wismut, Aluminium, Graphit, Molybdändisulfid, Wolframdisulfid, Zinksulfid, Calciumfluorid und Bornitrid.

Obwohl die hiesige Erfindung im Folgenden in Bezug auf Getriebe von Windkraftanlagen beschrieben wird, ist grundsätzlich auch möglich, dass die Welle, das Gleitlagersegment (10) und/oder die Lagerschale auch in anderen Applikationen Verwendung findet. Diese sind beispielsweise, jedoch nicht beschränkt auf die folgende Auflistung, Hydraulikkolben, Pinolenführungen, Stützlagern, Schneckenzahnstangen, Schrauben, Führungsschienen, Lagerringen und anderen Bauteilen. Die Stahlwelle kann folglich in diversen Industrieapplikationen eingesetzt werden, wie beispielsweise Getrieben in Wasserturbinen oder Gasturbinen, bei denen eine Leistung durch einen Leistungserzeuger erzeugt wird, welcher eine drehmomentübertragende Verbindung zu einem Getriebe aufweist, kann die Stahlwelle der vorliegenden Erfindung auch in mindestens einem Bauteil des Getriebes angeordnet sein. Das Getriebe in einer Industrieapplikation wiese sodann eine drehmomentübertragende Verbindung zu weiteren mechanischen Komponenten auf, die beispielsweise die Leistung übertragen und/oder Bauteile antreiben können. Bei dem Leistungserzeuger kann es sich beispielsweise um eine technische Einrichtung handeln, die mechanische Energie abgibt, wobei die Energiezufuhr beispielsweise mittels elektrischer, chemischer, thermischer oder elektromagnetischer Energie zugeführt wird. Beispiele für einen solchen Leistungserzeuger wären, ohne beschränkt auf diese zu sein, ein Generator, Motor, oder eine Strömungsmaschine, wie eine Turbine. In einer bevorzugten Ausführung wird die Welle als Planetenwelle in einem Planetengetriebe verwendet, welches besonders bevorzugt in einer Windkraftanlage Anwendung findet.

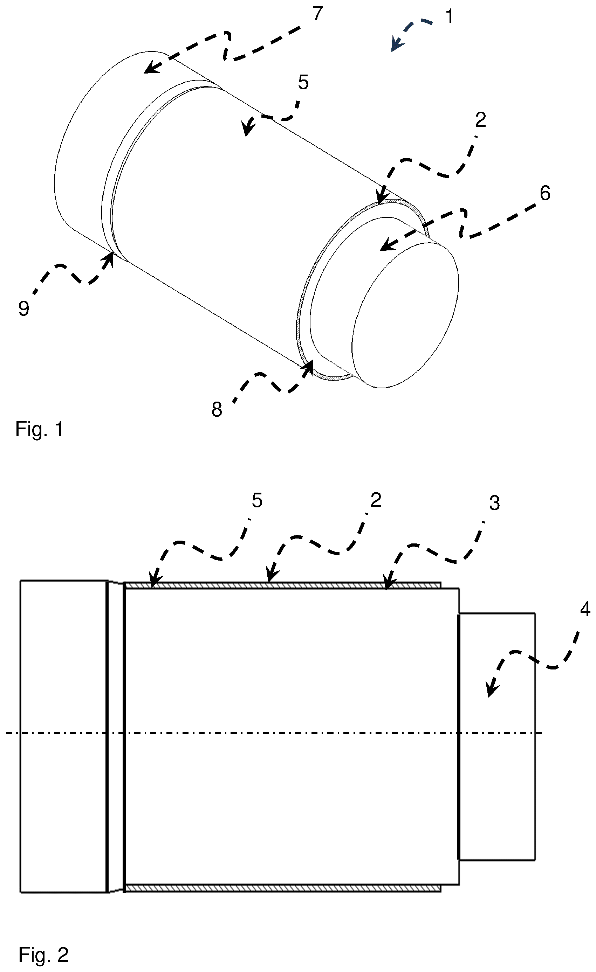

Die Fig. 1 stellte eine erfindungsgemäße Welle (1) dar, welche beispielsweise in einem Planetenradgetriebe verwendet werden kann. Die Welle (1) kann hierbei an mindestens einer Seite, an einem ersten Durchmesser (6), an einem zweiten Durchmesser (7), oder an beiden Durchmessern (6, 7) befestigt sein, beispielsweise in einem Planetenträger. Die Gleitoberfläche (5) wird hierbei durch eine Polymerschicht (2) ausgebildet, wobei insbesondere die Mantelfläche der Polymerschicht (2) die Gleitoberfläche (5) ausbildet. Die Polymerschicht (2) erstreckt sich axial vorzugsweise zwischen einem ersten Abschnitt der Welle (8) und einem zweiten Abschnitt der Welle (9). In einem bevorzugten Aspekt weist die Polymerschicht (2) eine Schichtdicke von 0,1 mm bis 5 mm, bevorzugt eine Schichtdicke von 0,5 mm bis 1,5 mm auf.

Bei der Polymerschicht (2) kann es sich um gängige Beschichtungen, insbesondere Kunststoffbeschichtungen handeln, die die Eigenschaften der Welle (1) verbessern. Bei der Polymerschicht (2) kann es sich um einen oder mehrere Kunststoffe, Harze und Additive handeln. Das Harz kann beispielsweise, jedoch nicht beschränkt auf die folgende Auflistung, folgende Harze oder Kombinationen aus mehreren Harzen umfassen, Polyamid, Polyurethan, Polyester, Polyphenylensulfid, Fluorpolymer, Polyetheretherketon (PEEK), Polyimidharz, Polyoxymethylen (POM), Alkydharz, Polyacrylat, Epoxidharz, Phenolharz und/oder Silikonharz. Im Falle der Verwendung eines Additivs, kann es sich bei diesem, jedoch nicht limitiert auf die Folgende Auslistung, um Graphit, Kohlenstoff, Kohlenstoffnanoröhren (engl. "carbon nanotubes", CNTs), Polytetrafluorethylen (PTFE), Polyethylen, Molybdändisulfid (MoSi2), Wolframdisulfid, Zinksulfid, Zinn, Calciumfluorid, Bornitrid, Blei, Silber und/oder Bismut handeln. Vorzugsweise macht das Additiv 5-50 Gew.-% der Polymerschicht (2) aus.

Bevorzugt handelt es sich bei der Polymerschicht (2) um einen Gleitwerkstoff.

In einem Aspekt der Erfindung ist die Polymergleitschicht (2) vorzugsweise faserverstärkt. Faserverstärkte Polymerschicht bezeichnet hierbei eine Polymerschicht auf einer Kunststoffmatrix, welche zusätzlich ein oder mehrere Verstärkungsfasern umfasst. Die Verstärkungsfasern können hierbei anorganischer oder organischer Natur sein. Beispiele für Verstärkungsfasern, umfassen, sind jedoch nicht begrenzt auf die Folgende Auflistung, Glasfasern, Basaltfasern, Borfasern, Keramikfasern, Kieselsäurefasern, Kohlenstofffasern, Quarzfasern, Metallische Fasern, Stahl-Fasern, Kevlarfasern, Aramidfasern, Poly(p-phenylen-2,6-benzobisoxazol)-Fasern, Polyester-Fasern, Polyethylen-Fasern, Polymethylmethacrylat-Fasern, Polyamid-Fasern, wie Nylon-Fasern, Flachs-Fasern, Hanf-Fasern, Holzfasern, Sisalfasern und/oder andere Mineralien.

Zusätzlich kann die Polymerschicht (2) in einer Ausführungsform ferner reibungsmindernde Zusatzstoffe umfassen. Bei diesen Zusatzstoffen handelt es sich beispielsweise, jedoch nicht beschränkt auf die folgende Auflistung, um Graphit, Polyethylen, Molybdändisulfid, Polyetrafluorethylen oder andere bekannte Zusatzstoffe, die die Reibung vermindern können und den Verschleißeigenschaften verbessern können.

Auch weitere Additive und Füllstoffe können innerhalb der Polymergleitschicht (2) vorgesehen sein. Diese sind beispielsweise keramische Bestandteile, wie Silikate; Oxidische Rohstoffe, wie Titan(IV)-oxid (TiO₂); Nichtoxidische Rohstoffe, wie Siliciumcarbid (SiC); Kalk; Talk; Glas oder andere.

In einer besonders bevorzugten Ausführungsform wird die als Gleitschicht dienende Polymerschicht direkt in fließfähiger Form auf einen Bereich der Metalloberfläche der Welle (1), des Gleitlagersegment (10) und/oder der Lagerschale aufgebracht. Diese direkt aufgebrachte Gleitschicht in Form eines Polymers hat den Vorteil, dass diese leichter herzustellen ist und einen verbesserten Reibkoeffizienten, gute Mischreibungseigenschaften und eine gute Verschleißfestigkeit aufweist.

Wie dem Querschnitt der Welle in der Fig. 2 ferner entnommen werden kann, ist die Polymerschicht (2), die als Gleitschicht dient, derart an dem Stahlgrundkörper (4), beispielsweise, der Welle (1) angeordnet, dass diese in direkter Verbindung mit der Oberfläche an der Mantelfläche (3) des Stahlgrundkörpers (4) steht und diese bedeckt.

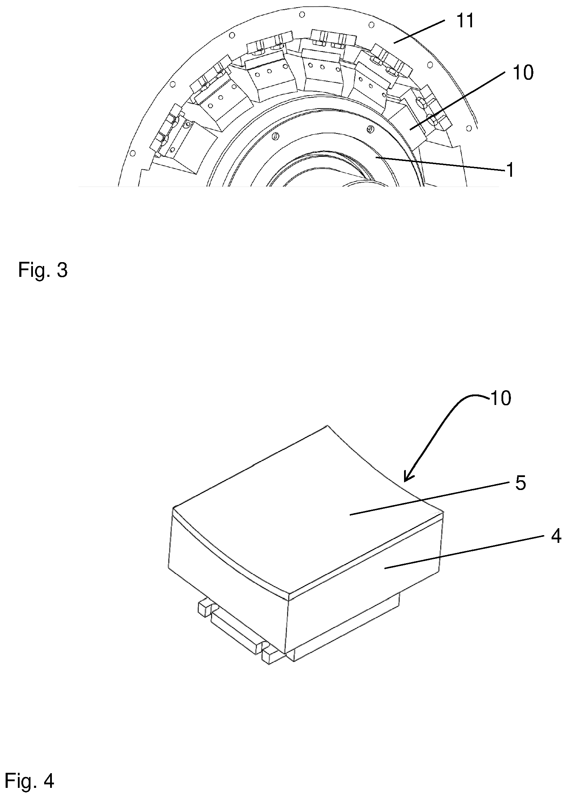

Die erfindungsgemäße Welle (1) wird dadurch gebildet, dass die Polymergleitschicht (2) ohne Zwischenschritte auf den Stahlgrundkörper (4) aufgebracht wird, wodurch die Welle (1) auf dem gesamten Umfang, vorzugsweise zwischen einem ersten Abschnitt der Welle (8) und einem zweiten Abschnitt der Welle (9), beschichtet wird. Gleiches gilt für die Herstellung eines Gleitlagersegment (10) und/oder einer Lagerschale, bei denen eine Polymerschicht in einem fließfähigen Zustand, vorzugsweise direkt aus dem Extruder kommend, im Spritzgussverfahren auf die gewünschte Metalloberfläche des Gleitlagersegmentes (10) und/oder der Lagerschale aufgebracht wird, um eine Gleitschicht, nämlich die Polymergleitschicht (2) zu bilden, wie beispielsweise den Fig. 3 und 4 entnommen werden kann.

Eine solche Beschichtung ohne die bekannten Zwischenschritte aus dem Stand der Technik, führt zu einem niedrigerem Reibkoeffizienten, guten Mischreibungseigenschaften und einer höheren Verschleißfestigkeit. Folglich betrifft die vorliegende Erfindung auch ein Verfahren zur Herstellung einer zuvor beschriebenen Polymergleitschicht auf mindestens einer Welle (1), mindestens einem Gleitlagersegment (10) und/oder mindestens einer Lagerschale.

Der Stahlgrundkörper (4) der Welle (1), des mindestens einen Gleitlagersegments (10) und/oder der mindestens einen Lagerschale, kann nach gängigen im Stand der Technik bekannten Verfahren hergestellt werden. Die Herstellungsverfahren umfassen, sind jedoch nicht begrenzt auf Gießen, Schmieden, Schweißen, Rollen und/oder andere Verfahren.

Das erfindungsgemäße Verfahren zur Herstellung einer Gleitschicht aus mindestens einer Polymerbeschichtung auf mindestens einer Welle (1), mindestens einem Gleitlagersegment (10) und/oder mindestens einer Lagerschale umfasst hierbei das Aufbringen einer Polymergleitschicht (2) unmittelbar auf den Stahlgrundkörper der mindestens einen Welle (1), mindestens einem Gleitlagersegment (10) und/oder mindestens einer Lagerschale. Hierbei kann der gesamte Stahlgrundkörper, jedoch bevorzugt eine vordefinierte Fläche mit der Polymerschicht (2) umgeben werden. Im Falle einer Welle (1) wird in einem bevorzugten Aspekt die Polymergleitschicht (2) auf die Fläche des Stahlgrundkörpers (4) zwischen einem ersten Abschnitt der Welle (8) und einem zweiten Abschnitt der Welle (9) aufgebracht.

Die Polymergleitschicht (2) wird hierbei auf den Komponenten, d.h. der mindestens einen Welle (1), dem mindestens einem Gleitlagersegment (10) und/oder mindestens einer Lagerschale, in einem fließfähigen Zustand auf mindestens einen Teil aufgetragen. Der fließfähige Zustand wird in der Regel dadurch erreicht, dass die Polymerschicht (2) eine erhöhte Temperatur aufweist. Nach der Auftragung auf mindestens einen Teil der Welle (1), des Gleitlagersegments (10) und/oder der Lagerschale, wird die Polymerbeschichtung (2) sodann abgekühlt, sodass diese fest wird. Die Auftragung erfolgt vorzugsweise in einem direkten Spritzgussverfahren bei dem die Polymerschicht (2) aus dem Extruder kommend direkt, ohne Zwischenschritte, aufgebracht wird und sodann abgekühlt wird, sodass diese fest wird. Mithilfe dieses Vorgehens wird eine Gleitschicht aus Polymer (Polymergleitschicht) ausgebildet, die die zuvor benannten Vorteile zum Stand der Technik aufweist. Aufgrund der Tatsache, dass die Polymergleitschicht (2) direkt, in einem fließfähigen Zustand auf den Stahlgrundkörper (4) aufgebracht wird, wird der gesamte Umfang der vordefinierten Fläche beschichtet. Bei dem mindestens einen Teil der Fläche bzw. der vordefinierten Fläche handelt es sich vorzugsweise um die Fläche des Stahlgrundkörpers (4) zwischen dem ersten Abschnitt der Welle (8) und dem zweiten Abschnitt der Welle (9). Jedoch kann das Polymer auch bestimmte Bereiche des Gleitlagersegments (10) und/oder der Lagerschale aufgetragen werden. Die Mantelfläche der Polymerschicht (2) bildet sodann die Gleitoberfläche (5) aus. Folglich verzichtet das hiesige Verfahren auf etwaige Zwischenschritte, wie beispielsweise der Herstellung von Halbzeugen aus Gleitmaterial und/oder die Herstellung einer Platte oder Rohres aus einer Polymerschicht. In einer bevorzugten Ausführung wird die Polymergleitschicht (2) mit Hilfe von Ätzmitteln, Haftvermittlern oder anderen chemischen Oberflächenbehandlungen auf den Stahlkörper (4) aufgebracht. In einem besonders bevorzugten Aspekt der Erfindung ist die Polymerschicht (2) mit Hilfe von Klebstoffen auf den Stahlgrundkörper (4) auf den Komponenten, d.h. der mindesten einen Welle (1), dem mindestens einem Gleitlagersegment (10) und/oder mindestens einer Lagerschale, aufgebracht.

Bei der Polymerschicht handelt es sich vorzugsweise um eine Kunststoffbeschichtung, die die Eigenschaften der Welle (1), des Gleitlagersegments (10) und/oder der Lagerschale, insbesondere ihre Gleitfähigkeit, den Reibkoeffizienten und die Verschleißfestigkeit verbessern. Bei der Polymerschicht (2) kann es sich um einen oder mehrere Kunststoffe, Harze und Additive handeln. Das Harz kann beispielsweise, nicht limitierend, folgende Komponenten oder Kombinationen aus diesen umfassen, Polyamid, Polyurethan, Polyester, Polyphenylensulfid, Fluorpolymer, Polyetheretherketon (PEEK), Polyimidharz, Polyoxymethylen (POM), Alkydharz, Polyacrylat, Epoxidharz, Phenolharz und/oder Silikonharz. Im Falle der Verwendung eines Additivs, kann es sich bei diesem, jedoch nicht beschränkt auf die folgende Auslistung, um Graphit, Kevlar, Aramith, Kohlenstoff, Kohlenstoffnanoröhren (engl. "carbon nanotubes", CNTs), Polytetrafluorethylen (PTFE), Polyethylen, Molybdändisulfid (MoSi2), Wolframdisulfid, Zinksulfid, Zinn, Calciumfluorid, Bornitrid, Silber und/oder Bismut handeln.

Bevorzugt handelt es sich bei der Polymerschicht (2) um einen Gleitwerkstoff.

Die Polymergleitschicht (2), in einem fließfähigen Zustand auf mindestens eine Fläche der Welle (1), des mindestens einen Gleitlagersegments (10) und/oder mindestens einen Lagerschale, aufgetragen wird, ist vorzugsweise faserverstärkt. Faserverstärkte Polymerschicht bezeichnet hierbei eine Polymerschicht auf einer Kunststoffmatrix, welche zusätzlich ein oder mehrere Verstärkungsfasern umfasst. Die Verstärkungsfasern können hierbei anorganischer oder organischer Natur sein. Beispiele für Verstärkungsfasern, umfassen, sind jedoch nicht begrenzt auf die folgende Auflistung, Glasfasern, Basaltfasern, Borfasern, Keramikfasern, Kieselsäurefasern, Kohlenstofffasern, Quarzfasern, Metallische Fasern, Stahl-Fasern, Aramidfasern, Kevlarfasern, Poly(p-phenylen-2,6-benzobisoxazol)-Fasern, Polyester-Fasern, Polyethylen-Fasern, Polymethylmethacrylat-Fasern, Polyamid-Fasern, wie Nylon-Fasern, Flachs-Fasern, Hanf-Fasern, Holzfasern, Sisalfasern und/oder andere Mineralien.

Zusätzlich kann die Polymerschicht in einer Ausführungsform ferner reibungsmindernde Zusatzstoffe umfassen. Bei diesen Zusatzstoffen handelt es sich beispielsweise, jedoch nicht beschränkt auf die folgende Auflistung, um Graphit, Polyethylen, Molybdändisulfid, Polyetrafluorethylen oder andere bekannte Zusatzstoffe, die die Reibung vermindern und den Verschleißeigenschaften verbessern können. Auch weitere Additive und Füllstoffe können in einem Aspekt innerhalb der Polymergleitschicht (2) vorgesehen sein. Diese sind beispielsweise keramische Bestandteile, wie Silikate; Oxidische Rohstoffe, wie Titan(IV)-oxid (TiO₂); nichtoxidische Rohstoffe, wie Siliciumcarbid (SiC); Kalk; Talk; Glas oder andere.

Die in einem fließfähigen Zustand aufgetragene Polymerbeschichtung (2) bildet an ihrer Mantelfläche die eigentliche Gleitoberfläche (5) aus. Die auf der Metallschicht aufgebrachte Polymerbeschichtung (2), welche mindestens einen Teil der Metallschicht bzw. des Stahlgrundkörpers (4) bedeckt, verfüllt hierbei Unebenheiten oder Poren der Metallschicht und bildet somit die Gleitoberfläche (5) aus.

In einer Ausführungsform der Erfindung wird die Polymerschicht mit einer Schichtdicke von 0,1 mm bis 5 mm aufgetragen. In einem bevorzugten Aspekt mit einer Schichtdicke von 0,5 mm bis 1,5 mm.

In einer bevorzugten Ausführungsform ist die Oberfläche (3) des Stahlgrundkörpers (4), d.h. die Mantelfläche, derart modifiziert, dass diese zu einer verbesserten Verankerung der Polymergleitschicht (2) führt. Bei der Modifizierung des Stahlgrundkörpers (4) wird vorzugsweise die Oberfläche angeraut, oder es wird eine Struktur auf der Oberfläche aufgebracht, die eine Verankerung der Gleitschicht auf der Stahloberfläche erlaubt. Ein Beispiel einer solchen Verankerungsstruktur ist in DE102021101097B3 aufgezeigt. In einer besonders bevorzugten Ausführungsform wird die Oberfläche des Stahlgrundkörpers (4) durch Ätzen, chemisches Modifizieren, Aufbringen eines Haftvermittlers, Aufbringen eines Klebstoffs und/oder einem Erstellen einer Oberflächenstruktur mit Hinterschnitten modifiziert.

Die erfindungsgemäße Welle (1), das mindestens einem Gleitlagersegment (10) und/oder die mindestens eine Lagerschale, wird vorzugsweise als Hauptrotorwelle oder ein Teil eines Getriebes einer in einer Windkraftanlage verwendet. Folglich betrifft die Erfindung auch ein Getriebe und/oder eine Windkraftanlage mit mindestens einer zuvor beschriebenen Welle (1), mindestens einem Gleitlagersegment (10) und/oder mindestens eine Lagerschale. Der Rotor einer Windkraftanlage ist üblicherweise auf einem Turm montiert und kann unterschiedliche Formen und Anzahl an Rotorblättern aufweisen, die Aufgabe des Rotors ist hierbei die kinetische Energie des Windes in Rotationsenergie umzuwandeln. Die Windkraftanlage umfasst daher in einem Aspekt einen Rotor, einen Turm und ein Getriebe, wobei der Rotor über eine Welle, bei welcher es sich um eine erfindungsgemäße Welle (1) handeln kann, drehmomentübertragend mit dem Getriebe verbunden ist. Das Getriebe ist wiederum mit einem Leistungserzeuger verbunden ist. Bei dem Leistungserzeuger kann es sich um jede technische Einrichtung handeln, die mechanische, chemische, thermische oder elektromagnetische Energie direkt in elektrische Energie umwandelt und umgekehrt. Da die hiesige Erfindung vorzugsweise auf die Anwendung innerhalb von Windkraftanlagen konzipiert ist, bezeichnet der Leistungserzeuger in diesem Fall vorzugsweise einen Generator, bei dem eine Energieübertragung von einer kinetischen Energie auf elektrische Energie erfolgt.

Diese und andere Ausführungsformen der vorliegenden Erfindung werden in der Beschreibung und den Beispielen offenbart und sind durch diese umfasst. Weitere Literatur über bekannte Materialien, Verfahren und Anwendungen die in Übereinstimmung mit der vorliegenden Erfindung verwendet werden können, können aus öffentlichen Bibliotheken und Datenbanken, beispielsweise unter Verwendung elektronischer Geräte aufgerufen werden. Ein vollständigeres Verständnis der Erfindung kann durch Bezugnahme auf die Figuren erhalten werden, die zum Zweck der Illustration bereitgestellt wurden und den Umfang der Erfindung nicht beschränken sollen.

### Bezugszeichenliste

1. Welle
2. Polymer(gleit)schicht
3. Oberfläche an der Mantelfläche
4. Stahlgrundkörper
5. Gleitoberfläche
6. Erster seitlicher Durchmesser der Welle
7. Zweiter seitlicher Durchmesser der Welle
8. Erster Abschnitt der Welle
9. Zweiter Abschnitt der Welle
10. Gleitlagersegment
11. Gehäuse

## Patentansprüche

1. Stahlwelle mit Polymerbeschichtung zur Befestigung an einem ersten Durchmesser (6), an einem zweiten Durchmesser (7) oder an beiden Durchmessern (6, 7), wobei mindestens ein Teil einer Fläche zwischen einem ersten Abschnitt (6) der Welle (1) und einem zweiten Abschnitt (9) der Welle (1) eine Polymerschicht (2) aufweist, welche auf einen Stahlgrundkörper (4) der Welle (1) aufgebracht ist und wobei die Mantelfläche der Polymerschicht (2) eine Gleitoberfläche (5) ausbildet.

2. Gleitlagersegment und/oder Lagerschale mit Polymerbeschichtung, wobei das Polymer auf einen Stahlgrundkörper (4) des Gleitlagersegment (10) und/oder der Lagerschale aufgebracht ist und wobei die Mantelfläche der Polymerschicht (2) eine Gleitoberfläche (5) ausbildet.

3. Stahlwelle, Gleitlagersegment und/oder Lagerschale nach Anspruch 1 oder 2, bei der die Polymerbeschichtung unmittelbar auf dem Stahlgrundkörper (4) aufgebracht ist.

4. Stahlwelle, Gleitlagersegment und/oder Lagerschale nach einem der Ansprüche 1 bis 3, wobei die Polymerbeschichtung mit Hilfe von Ätzmitteln, Haftvermittlern oder anderen chemischen Oberflächenbehandlungen auf einen Stahlgrundkörper (4) aufgebracht ist.

5. Stahlwelle, Gleitlagersegment und/oder Lagerschale nach einem der Ansprüche 1 bis 4, wobei die Polymerbeschichtung mit Hilfe von Klebstoffen auf einen Stahlgrundkörper (4) der Welle (1), des Gleitlagersegments und/oder der Lagerschale aufgebracht ist.

6. Stahlwelle einem der Ansprüche 1 bis 5, wobei die Polymerschicht (2) sich axial zwischen dem ersten Abschnitt der Welle (8) und dem zweiten Abschnitt der Welle (9) erstreckt.

7. Stahlwelle, Gleitlagersegment und/oder Lagerschale einem der Ansprüche 1 bis 6, wobei die Polymerschicht (2) eine Schichtdicke von 0,1 mm bis 5 mm, vorzugsweise eine Schichtdicke von 0,5 mm bis 1,5 mm aufweist.

8. Stahlwelle, , Gleitlagersegment und/oder Lagerschale nach einem der Ansprüche 1 bis 7, wobei
a) der Stahlgrundkörper (4) einen C45-Stahl, 16MnCr5, 20CrMnMo, 20CrMnTi, 40Cr, 42CrMo4, 18CrNiMo7-6 und/oder 34CrNiMo6 umfasst; und/oder
b) die Polymerschicht (2) ein Polyamid, Polyurethan, Polyester, Polyphenylensulfid, Fluorpolymer, Polyetheretherketon (PEEK), Polyimidharz, Polyoxymethylen (POM), Alkydharz, Polyacrylat, Epoxidharz, Phenolharz und/oder Silikonharz umfasst und wobei die Polymerschicht (2) vorzugsweise ferner mindestens ein Additiv umfasst, wobei es sich bei dem Additiv vorzugsweise um Graphit, Kohlenstoff, Kohlenstoffnanoröhren, Polytetrafluorethylen, Polyethylen, Molybdändisulfid, Wolframdisulfid, Zinksulfid, Zinn, Calciumfluorid, Bornitrid, Blei, Silber und/oder Bismut handelt.

9. Stahlwelle, Gleitlagersegment und/oder Lagerschale nach einem der Ansprüche 1 bis 8, wobei es sich bei der Polymerschicht (2) um einen Gleitwerkstoff handelt.

10. Stahlwelle, Gleitlagersegment und/oder Lagerschale nach einem der Ansprüche 1 bis 9, wobei die Polymergleitschicht
a) faserverstärkt ist, wobei die Faserverstärkung durch ein oder mehrere Verstärkungsfasern erreicht wird, umfassend Glasfasern, Basaltfasern, Borfasern, Keramikfasern, Kieselsäurefasern, Kohlenstofffasern, Quarzfasern, Metallische Fasern, Stahl-Fasern, Kevlarfasern, Aramidfasern, Poly(p-phenylen-2,6-benzobisoxazol)-Fasern, Polyester-Fasern, Polyethylen-Fasern, Polymethylmethacrylat-Fasern, Polyamid-Fasern, wie Nylon-Fasern, Flachs-Fasern, Hanf-Fasern, Holzfasern, Sisalfasern und/oder andere Mineralien; und/oder
b) reibungsmindernde Zusatzstoffe und/oder weitere Komponenten umfasst, wobei es sich bei den Zusatzstoffen und weiteren Komponenten vorzugsweise um Graphit, Polyethylen, Molybdändisulfid, Polyetrafluorethylen, Silikate, Titan(IV)-oxid, Siliciumcarbid, Kalk, Talk und/oder Glas handelt.

11. Verfahren zur Herstellung einer Stahlwelle, eines Gleitlagersegments und/oder einer Lagerschale mit Polymerbeschichtung umfassend die folgenden Schritte:
a) Herstellen eines Stahlgrundkörpers (4) einer Welle (1), eines Gleitlagersegment und/oder einer Lagerschale;
b) Aufbringen einer Polymergleitschicht (2) unmittelbar auf mindestens eine Fläche des Stahlgrundkörpers (4); und
c) Abkühlen der Polymergleitschicht (2) auf dem Stahlgrundkörper (4) zur Herstellung einer Gleitschicht (5).

12. Verfahren nach Anspruch 11, wobei die Aufbringung der Polymergleitschicht (2) auf der Welle (1) auf die Fläche des Stahlgrundkörpers (4) zwischen einem ersten Abschnitt der Welle (8) und einem zweiten Abschnitt der Welle (9) erfolgt.

13. Verfahren nach Anspruch 11 oder 12, wobei die Polymergleitschicht (2) in einem fließfähigen Zustand aufgebracht wird, vorzugsweise wobei die Auftragung der Polymerschicht (2) in einem direkten Spritzgussverfahren erfolgt, wobei die Polymerschicht (2) aus dem Extruder kommend direkt, ohne die Verwendung von Halbzeugen, auf die Welle (1), das Gleitlagersegment und/oder die Lagerschale oder einen Teil der Welle (1), des Gleitlagersegments und/oder der Lagerschaleaufgebracht wird.

14. Verfahren nach einem der Ansprüche 11 bis 13, wobei
a) es sich bei der Polymerschicht (2) um Polyamid, Polyurethan, Polyester, Polyphenylensulfid, Fluorpolymer, Polyetheretherketon, Polyimidharz, Polyoxymethylen, Alkydharz, Polyacrylat, Epoxidharz, Phenolharz und/oder Silikonharz handelt, wobei die Polymerschicht vorzugsweise mindestens ein Additiv oder weitere Komponente ausgewählt aus der folgenden Auflistung umfasst: Graphit, Kohlenstoff, Kohlenstoffnanoröhren, Polytetrafluorethylen, Polyethylen, Molybdändisulfid, Wolframdisulfid, Zinksulfid, Zinn, Calciumfluorid, Bornitrid, Blei, Silber, Bismut, Glasfasern, Basaltfasern, Borfasern, Keramikfasern, Kieselsäurefasern, Kohlenstofffasern, Quarzfasern, Metallische Fasern, Stahl-Fasern, Kevlarfasern, Aramidfasern, Poly(p-phenylen-2,6-benzobisoxazol)-Fasern, Polyester-Fasern, Polyethylen-Fasern, Polymethylmethacrylat-Fasern, Polyamid-Fasern, Flachs-Fasern, Hanf-Fasern, Holzfasern, Sisalfasern, Mineralien, Silikate, Titan(IV)-oxid, Siliciumcarbid, Kalk, Talk, und/oder Glas; und/oder
b) die Polymerschicht (2) mit einer Schichtdicke von 0,1 mm bis 5 mm, vorzugsweise mit einer Schichtdicke von 0,5 mm bis 1,5 mm aufgetragen wird.

15. Verfahren nach einem der Ansprüche 11 bis 14, wobei die die Oberfläche (3) des Stahlgrundkörpers (4) vor der Auftragung der Polymerschicht (2) modifiziert wird, wobei die Modifizierung des Stahlgrundkörpers (4) vorzugsweise ein Anrauen der Oberfläche, ein Ätzen, ein chemisches Modifizieren, ein Aufbringen eines Haftvermittlers, ein Aufbringen eines Klebstoffs und/oder ein Erstellen einer Oberflächenstruktur mit Hinterschnitten umfasst.

16. Getriebe einer Windenergieanlage umfassend mindestens eine Stahlwelle, mindestens ein Gleitlagersegment und/oder mindestens eine Lagerschale nach einem der Ansprüche 1 bis 10 oder eine Stahlwelle, ein Gleitlagersegment und/oder eine Lagerschale hergestellt nach einem der Ansprüche 11 bis 15.
